# EUROPEAN PATENT APPLICATION

(11) **EP 4 717 555 A1**
(43) Date of publication of application: **01.04.2026**
(21) Application number: 24203451.0
(22) Date of filing: 30.09.2024
(51) Int. Cl.: B62B 3/00, B62B 5/04

(54) **TROLLEY WITH A RELEASE BRAKING SYSTEM**

(71) Applicant: Cairate Sviluppi Industriali S.r.l., 21050 Cairate (VA) (IT)
(72) Inventor: TARTARO, Massimo, 21050 CAIRATE (VA) (IT)
(74) Representative: Tiburzi, Andrea

(57) **Abstract**

A food trolley (100) for transporting foods and similar, comprising a frame (10) defining a storage compartment (1) for the containment of said foods; a moving system (2) connected to said frame (10) to enable the movement of said food trolley (100); and a release braking system (3) comprising braking means (56) acting on said moving system (2), and an actuator assembly (5) comprising an actuator member (31) capable of assuming a release position, in wherein it activates said release braking means (3), locking said moving system (2), and a working position, when grasped by a user to move said trolley (100), in wherein said trolley (100) deactivates said release braking system (3), so as to release said moving system (2).

## Description

The present invention relates to a food trolley with a release braking system.

### Field of the invention

The invention is in the technical field of food trolleys, particularly in the technical field of food trolleys used in transportation equipment such as trains and airplanes.

### Prior art

There is currently a wide range of food trolleys in the market used for transporting food and beverages in trains and/or airplanes.

Food trolleys are used to transport food such as food and beverages that can be served to passengers by a designated operator.

Relative to the technical field of food trolleys, prior art describes solutions in which such trolleys comprises a frame defining a compartment for storing food having rails for subdividing the same compartment into several compartments. In such compartments are stowed the food arranged within appropriate means of stowage.

Four wheels are connected to the frame to move the trolley.

A containment structure is attached above the frame to allow an operator to safely rest a food or drink without the risk of it falling to the ground while performing passenger service functions.

The food trolleys also comprises a handle or gripping element, to allow the user an easy, ergonomic grip that allows the trolley to be carried along train and airplane corridors without difficulty.

In addition, the food trolleys comprises a wheel braking system that can allow the user to lock the wheels and prevent accidental handling of the food trolley.

Two pedals are provided to implement the braking system, one for locking and one for unlocking the trolley wheels. These pedals can also be of different colors, usually red for the lock pedal and green for the release pedal.

In addition, food trolleys must necessarily comply with certain safety regulations and dimensional standards of rail and air transportation. The standards concern external gauge sizing and internal capacity per stowage unit. Specifically, the external gauge sizing standards must be:
- width: 28.6cm;
- height: 100.0cm;
- depth: 66.5cm.

The trolleys currently on the market and described in the prior art have some drawbacks and disadvantages mainly related to the braking system and which will be better explained below.

An initial drawback of trolleys according to the prior art is due to the uncomfortable_placement of the pedals near the trolley wheels, which is not always intuitively and conveniently accessible.

An additional disadvantage is that if an operator accidentally locks or unlocks the wheels, he or she may run the risk that the trolley will suddenly lock or move without the said operator having control.

### Scope of the invention

Therefore, a purpose of the present invention is to provide a food trolley with an unlocking braking system that can solve the above-mentioned drawbacks and critical issues.

It is also a purpose of the present invention to make a food trolley having a braking system of greater effectiveness and convenience than those currently available.

Another purpose of the present invention is to provide a food trolley having a braking system of simple and inexpensive construction.

A further purpose of the present invention is to provide a food trolley with a release brake system that prevents accidental handling or locking of the trolley during its use.

Another purpose of the present invention is to make a food trolley with an unlocking braking system that facilitates the operations of users using it.

### Object of the invention

It is, therefore, specific object of the present invention a food trolley for transporting foods and similar, comprising: a frame defining a storage compartment for the containment of said foods; a moving system connected to said frame to enable the movement of said food trolley, and a release braking system comprising braking means acting on said moving system, characterized by comprising an actuator assembly comprising an actuator member capable of assuming a release position, in wherein it activates said release braking means, locking said moving system, and a working position, when grasped by a user to move said trolley, in wherein said trolley deactivates said release braking system, so as to release said moving system.

Always according to the invention, said actuator assembly comprises actuators that operatively connect said actuator member to said release braking system.

Still according to the invention, said actuators comprise: a rotating bar pivoted to said frame and configured to activate and deactivate said release braking system, at least one connecting cable connecting said actuator member to said rotating bar, and a plurality of brake cables connecting said rotating bar to said braking means.

Advantageously according to the invention, said actuator assembly comprises at least one spring connected between said actuator member and said frame configured to move said actuator member back from said working position to said release position when said operator releases said actuator member by activating said release braking system.

Further according to the invention, the food trolley comprises a holding and gripping structure fixed to said frame and including a fixed handle for holding and carrying said trolley.

Preferably according to the invention, said fixed handle is arranged inferiorly to said actuator member.

Always according to the invention, said at least one spring is arranged in a respective seat comprised in said holding and gripping structure.

Still according to the invention, said moving system comprises a pair of front wheels constrained in the longitudinal direction of travel and a pair of rear wheels free to rotate on their own vertical axis.

Advantageously according to the invention, said frame comprises a cover plate for protecting the components of said actuator assembly.

Further according to the invention, said actuator member is a lever, a handle or similar.

### Brief description of the figures

The present invention will be now described, for illustrative but not limitative purposes, according to its preferred embodiments, with particular reference to the figures of the enclosed drawings, wherein:
- figures 1A and 1B are two perspective views of a food trolley with an unlocking braking system, which is the subject of the present invention;
- figure 2A is a front view of the food trolley with release braking system in figure 1A;
- figures 2B and 2C show two rear views of the food trolley with release braking system in figure 1A, with and without opening the wall or the door;
- figure 3 is a top view of the food carriage with release braking system in figure 1A;
- figure 4 is a side view of the food trolley with release braking system of figure 1A;
- figures 5A and 5B are two perspective views of the frame of the food trolley with release braking system of figure 1A;
- figures 6A and 6B are perspective views of the opening wall or door of the food trolley with release braking system according to the invention;
- figure 6C is a front view of the opening wall or door in figure 6A;
- figures 7A-7C show bottom, front, and side views of the handling parts of the food trolley with the release braking system according to the invention;
- figure 7D is a view of the actuators integrated into the frame of the food trolley with the release braking system according to the invention;
- figure 7E is a further view of the moving parts of the food trolley with the release braking system according to the invention;
- figures 8A and 8B show two top views, with and without cover plate, of the actuators integrated into the frame of the food trolley with the release braking system according to the invention;
- figure 9 is a side view of a detail of the actuators in figure 8A;
- figure 10A and 10B are side views of the handling parts of the food trolley with release the braking system according to the invention;
- figure 11 is a cross-sectional view of the lock integrated into the opening wall or door of the food trolley with the release braking system according to the invention;
- figure 12 is a cross-sectional view of a detail of the opening wall or lockable door of the food trolley with the release braking system according to the invention.
- figures 13A and 13B show details of the food trolley actuator assembly with the release braking system according to the invention.

### Detailed description

In the various figures, similar parts will be indicated by the same numerical references.

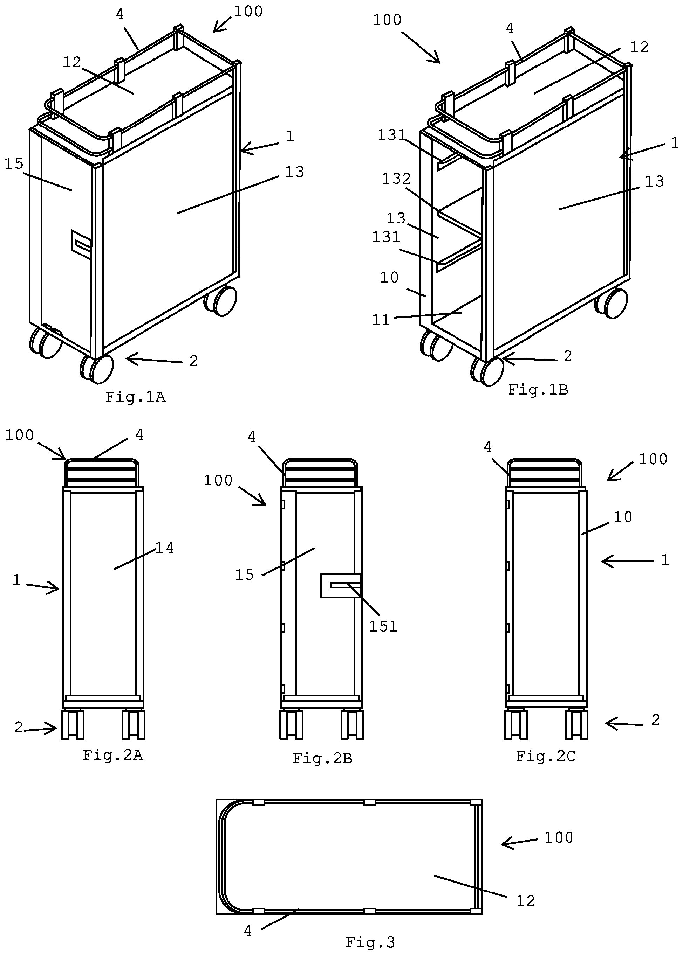

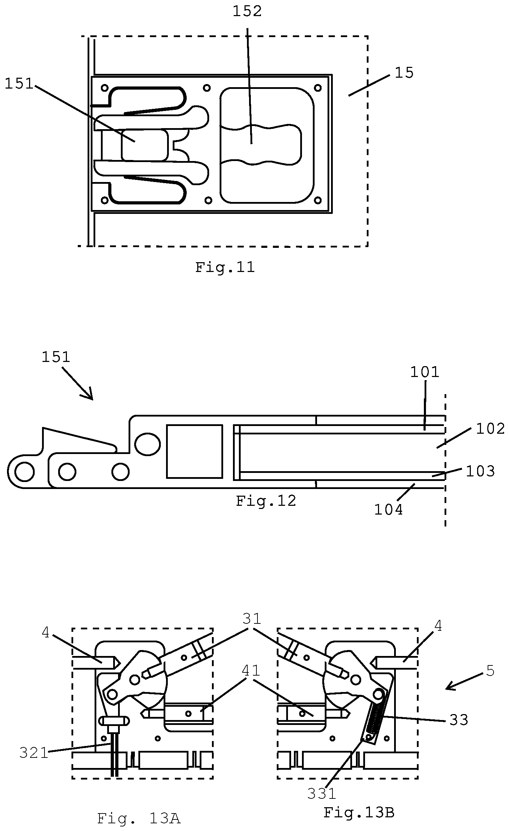

Referring to the figures 1-13B, a first embodiment of the food trolley with release braking system according to the invention is observed.

The food trolley with release braking system that is the subject of the invention is referred to by the numerical reference 100, and in said first embodiment, according to the present invention, the food trolley 100 comprises a frame 10 defining a compartment 1, handling parts 2, a holding and gripping structure 4, a release braking system 3, and an actuator system 5.

Referring to figures 1A and 1B, frame 10 has a rectangular prism-shaped structure and comprises:
- a lower wall or bottom 11;
- an upper wall 12;
- a pair of side walls 13;
- a front wall 14;
- an opening back wall or door 15.

Each of the above walls is made with a layered structure having a plurality of sheets or panels made of materials such as aluminum or plastic materials.

To make the food trolley 100 thermally insulated, an additional Fonitek heat-insulating panel having high thermal insulation properties, such as having thermal conductivity less than or equal to 0.035W/mK at 10°C, is inserted between the above sheets or panels.

In the embodiment shown in the figures, the walls of the food trolley 100 are made, starting from the inside to the outside, as better described in the following sections.

The bottom or bottom wall 11 and the top wall 12 have a total thickness of 10mm and comprises:
- an inner aluminum foil 101 having a thickness of 1.5 mm;
- a thermal insulation panel made of Fonitek 102 having a thickness of 7mm;
- an outer surface of stainless steel or aluminum having a thickness of 1.5 mm.

Referring to figure 12, the pair of side walls 13, front wall 14 and rear wall or door 15 have a total thickness of 9.8mm and comprises:
- an inner aluminum foil 101 having a thickness of 1.5 mm;
- a thermal insulation panel made of Fonitek 102 having a thickness of 7mm;
- an outer aluminum foil 103 having a thickness of 0.8mm;
- a printable aluminum or plastic graphic panel 104 having 1mm thickness with background color of your choice and customizable graphics.

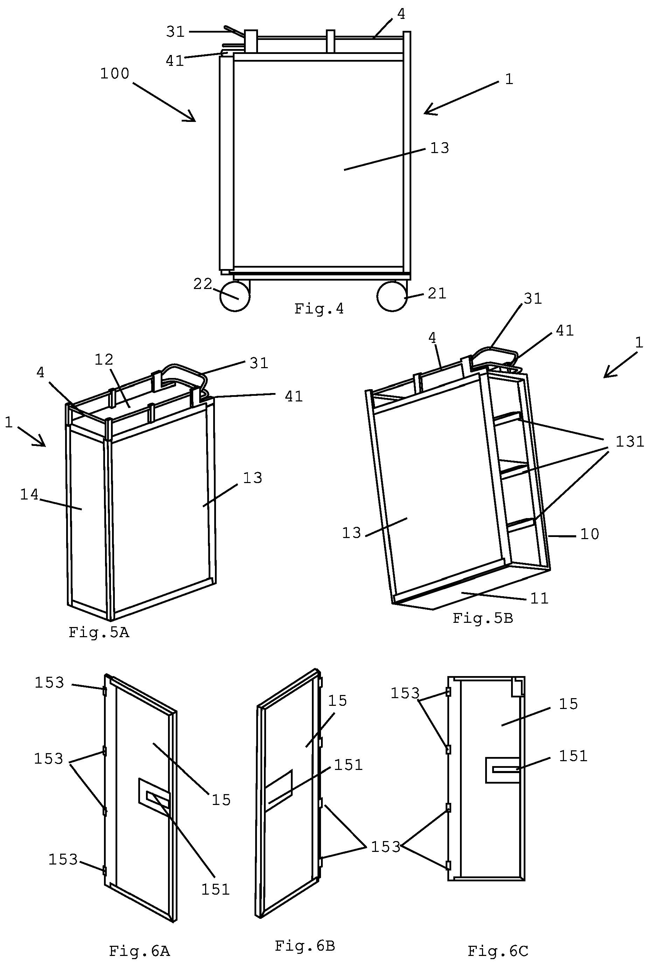

Referring to figures 1B and 5B, the pair of sidewalls 13 comprises one or more sliding rails 131 and at least one central reinforcing crossbar, not visible in the figures, attached to the inner aluminum foil 101 of the same sidewalls 13.

The sliding rails 131 are arranged to slide an aluminum foil 132 that performs the dual function of supporting the stowage units (not shown) and strengthening the overall structure of the food trolley 100.

As visible in figures 6A-6C, the opening rear wall or door 15 comprises a concealed structure for housing a lock 151.

In a preferred embodiment, visible in figure 11, the lock 151 comprises a flattened handle 152. The flattened handle 152 has reduced protrusions so as not to impede the passage and actions of the operator using the food trolley 100.

The lock 151 is also suitable for the optional application of a plastic seal of the "choke" type.

The opening rear wall or door 15 is connected to the frame 10 by one or more hinges 153 that allow complete tilting of the same opening rear wall or door 15.

In a further embodiment, a magnet retention mechanism, not visible from the outside, can be integrated on the side walls 13, allowing the door 15 to stably couple with the walls 13 when they are in contact.

In the embodiment shown in figures 1A-1B and 2A-2C, the opening rear wall or door 15 is arranged on the push side on which the operator stands, so that the operator can easily carry the trolley 100 and open or close the opening rear wall or door 15 to access compartment 1.

In a further embodiment, not shown in the figures, the front wall 14 is also openable to realize a food trolley 100 with double doors, both front and rear.

This embodiment also contains access to the interior of the 100 trolley by any additional operator who is located near the front wall 14 of the food trolley 100.

This allows easy access to compartment 1 even if the space is tight and the food trolley 100 cannot be rotated or bypassed.

The graphic panels 104 are easily replaced and, if necessary, washed by the maintainer of the food trolley 100 itself.

Advantageously, each graphic panel 104 can be made of aluminum or abrasion-resistant plastic, depending on requirements and needs. In addition, the background color and polychrome graphics are customizable according to preference.

Referring to figures 1A-1B, 2A-2C, 4 and 7A-7C, the food trolley 100 is equipped with moving parts 2 comprising four independent wheels, two at the front and two at the rear.

The front and rear wheels are attached to the lower wall 11 of frame 1 by means of suitable fasteners.

In a preferred embodiment of the present invention, the moving parts 2 comprises two front wheels 21, which are constrained in the longitudinal direction of movement, and two rear wheels 22, which are free to rotate on their own vertical axis, and are arranged on the rear or push side of the food trolley 100.

In a further embodiment, the moving parts 2 provide for all four wheels to be free to rotate on their vertical axis.

Additionally, the handling devices 2 may have wheels having a brake safety release mechanism, which can be operated if the brake mechanism fails, and a releasable constraint mechanism so that the wheel is fixed in the direction of travel but by applying force becomes rotating until it returns to its position and locks again.

Trolley 100 also comprises a release braking system 3, which is manually operated by the user and comprises braking means 56, known by themselves, acting on the handling parts 2, to allow or prevent the handling of the food trolley 100.

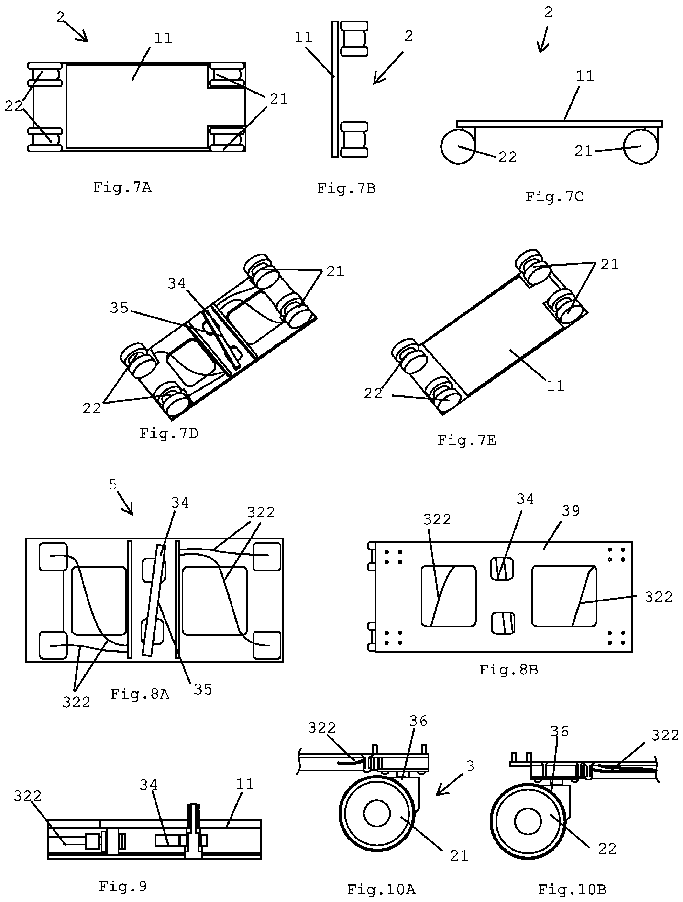

Referring to figures 10A and 10B, when the release braking system 3 is active, the braking means 56 are in contact with the handling parts 2 preventing, due to the frictional force generated, from being able to rotate and move the food trolley 100.

On the other hand, when the release braking system 3 is not active, the braking means 56 are not in contact with the handling parts 2 and it is possible to move the food trolley 100.

Referring to figures 1A-1B, 2A-2C and 4, a holding and gripping structure 4 is attached to the frame 10 of the food trolley 100. In the embodiment shown in the figures, the holding and gripping structure 4 is attached to the upper wall 12 of the food trolley 100

The holding and gripping structure 4 functions as a barrier for food or the like that an operator may place on the upper wall 12 during service set-up.

The holding and gripping structure 4 emerges from the food trolley 100 so that objects or food resting on the upper wall 12 will not be allowed to fall from the food trolley 100, even when the food trolley 100 is being moved or in the event of accidental sway caused by the train or plane on which it is being used.

As visible in figures 4 and 5A-5B, the holding and gripping structure 4 comprises a fixed handle 41 for gripping and pushing the food trolley 100 and can allow for the housing of an actuating member 31 for activating/deactivating the release braking system 3 as will be better illustrated below.

The fixed handle 41 allows the user to have a comfortable grip for handling the food trolley 100.

Referring to figures 4 and 5A-5B, the actuating member 31 is arranged superior to the fixed handle 41.

In further embodiments, the actuating member 31 can be a handle, lever or the like.

The food trolley 100 also comprises an actuator assembly 5 comprising:
- the actuating member 31 capable of assuming a release position, in which it activates said release braking system 3, locking the handling organs 2, and a working position, when grasped by a user to move of the food trolley 100, in which it deactivates said release braking system 3, to unlock said moving members 3;
- at least one spring 33 comprised in the holding and gripping structure 4, arranged in a respective seat 331, and connected between the movable handle 31 and the frame 10. The spring 33 is arranged in compression to return the movable handle 31 from its working position to its released position when released by the user, thereby activating the release braking system 3; and
- of the actuators that operationally connect the actuating member 31 to the release braking system 3.

Referring to figures 13A-13B, seat 331 for spring 33 is comprised within the holding and gripping structure 4.

Referring to figures 7D, 8A-8B and 13A-13B, said actuators comprises at least a connecting cable 321, brake cables 322, and a rotating bar 34 pivoted to the base wall 11 of frame 10.

More in detail, connecting cable 321 connects the actuating member 31 to the rotate bar 34, and braking cables 322 connect the same rotate bar 34 to the braking means 56.

In particular embodiments, the actuators can be mechanical cables, spring cables or other types of actuators.

When the trolley is stationary, in a static position, the braking means 56 are active and act on both the front wheels 21 and the rear wheels 22, so as not to allow them to rotate and consequently move the food trolley 100.

To unlock the handling parts 2 and move the trolley 100, it is necessary to act on the actuating member 31 included in the containment and gripping structure 4.

Acting on the actuating member 31, particularly grasping it and bringing it downward as it approaches the fixed handle 41, causes tension to be applied to the connecting wire 321. This tension is transmitted to the rotating rod 34, which makes a counterclockwise rotation.

Through such rotation, the rotating bar 34 brings tension to the brake cables 322 that act on the braking means 56, disengaging the release braking system 3 and unlocking the handling parts 2 so that the food trolley 100 can be moved.

When the user releases the actuating member 31, either voluntarily or accidentally, the spring 33, compressed during the approach of the same actuating member 31 to the fixed handle 41, extends bringing the actuating member 31 to the released position, as visible in figures 13A and 13B.

The extension of the spring 33 allows the actuating member 31 to move independently upward, returning to its released position and removing the tension present on the connecting cable 321 allowing the subsequent rotation, clockwise, of the rotating bar 34.

This also removes the tension on the braking wires 322 and activates the braking means 56 of the release braking system 3, which locks the handling parts 2 preventing the handling of the food trolley 100.

Therefore, to move trolley 100, it is necessary for an operator to voluntarily grasp and lower the actuator 31 to deactivate the release braking system and unlock the handling parts 2.

This feature increases the safety and ease of use of the food trolley 100 itself. In fact, the food trolley 100 will only be able to move at the will and command of the operator using it.

Referring to figures 8A and 8B, to prevent breakage and accidental contact, all components and mechanisms of the release braking system 3 found in the lower wall 11 are protected by a cover plate 39, such as a metal casing, which allows maintenance only by trained operators.

Such cover plate 39 is included within the lower wall or bottom 11.

The materials used and the construction techniques employed make it possible to obtain a food trolley 100 having a very light and agile structure, but at the same time robust (weighing about 30 Kg) and capable of handling a significant specific load, even greater than 150 Kg.

The food trolley 100 has high stability, especially when stationary and unmanned, in addition to remarkable maneuverability in use.

In addition, the food trolley 100 has rounded corners designed to reduce or eliminate any interference that could damage surrounding areas when passing the food trolley 100 itself.

The Food Trolley 100 is designed to have minimal maintenance while reducing the cost of such activity. In fact, all materials used are commercially available or easily made by the manufacturer, and replacement parts, if needed during the equipment's useful life, are standard and readily available.

The food trolley 100 can also be subjected to washing without any risk to its integrity and functionality.

Advantageously, the 100 food trolley with the release brake system is designed to meet the safety regulations and dimensional standards of rail and air transportation.

From the description given, the features of the food trolley with release braking system, which is the subject of the invention, are clear, as are its advantages.

Finally, it is clear that numerous other variations may be made to the device at issue, without departing from the principles of novelty inherent in the inventive idea, just as it is clear that, in the practical implementation of the invention, the materials, shapes and sizes of the details illustrated may be any as needed and the same may be replaced with equivalents.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Food trolley (100) for transporting foods and similar, comprising:
a frame (10) defining a storage compartment (1) for the containment of said foods;
a moving system (2) connected to said frame (10) to enable the movement of said food trolley (100); and
a release braking system (3) comprising braking means (56) acting on said moving system (2);
**characterized by** comprising an actuator assembly (5) comprising an actuator member (31) capable of assuming
a release position, in wherein it activates said release braking means (3), locking said moving system (2), and
a working position, when grasped by a user to move said trolley (100), in wherein said trolley (100) deactivates said release braking system (3), so as to release said moving system (2).

2. Food trolley (100) according to claim 1 **characterized in that** said actuator assembly (5) comprises actuators that operatively connect said actuator member (31) to said release braking system (3).

3. Food trolley (100) according to claim 2 **characterized in that** said actuators comprise:
a rotating bar (34) pivoted to said frame (10) and configured to activate and deactivate said release braking system (3);
at least one connecting cable (321) connecting said actuator member (31) to said rotating bar (34); and
a plurality of brake cables (322) connecting said rotating bar (34) to said braking means (56).

4. Food trolley (100) according to any one of the preceding claims **characterized in that** said actuator assembly (5) comprises at least one spring (33) connected between said actuator member (31) and said frame (10) configured to move said actuator member (31) back from said working position to said release position when said operator releases said actuator member (31) by activating said release braking system (3).

5. Food trolley (100) according to any of the preceding claims **characterized by** comprising a holding and gripping structure (4) fixed to said frame (10) and including a fixed handle (41) for holding and carrying said trolley (100).

6. Food trolley (100) according to claim 5 **characterized in that** said fixed handle (41) is arranged inferiorly to said actuator member (31).

7. Food trolley (100) according to claims 4-6 **characterized in that** said at least one spring (33) is arranged in a respective seat (331) comprised in said holding and gripping structure (4).

8. Food trolley (100) according to one or more of the preceding claims **characterized in that** said moving system (2) comprises a pair of front wheels (21) constrained in the longitudinal direction of travel and a pair of rear wheels (22) free to rotate on their own vertical axis.

9. Food trolley (100) according to one or more of the preceding claims **characterized in that** said frame (10) comprises a cover plate (39) for protecting the components of said actuator assembly (5).

10. Food trolley (100) according to one or more of the preceding claims **characterized in that** said actuator member (31) is a lever, a handle or similar.
